# EUROPEAN PATENT SPECIFICATION

(11) **EP 0 451 374 B1**
(45) Date of publication and mention of the grant of the patent: **29.09.1993**
(21) Application number: 90203523.7
(22) Date of filing: 28.12.1990
(51) Int. Cl.: F02B 77/08

(54) **Optical pressure sensor for determining the variation of the pressure in an internal combustion engine**
Optischer Drucksensor zur Feststellung der Druckschwankungen in einer Brennkraftmaschine
Capteur optique de pression pour déterminer les variations de pression dans un moteur à combustion interne

(30) Priority: 05.04.1990 NL 9000801
(43) Date of publication of application: 16.10.1991
(73) Proprietor: TEXAS INSTRUMENTS HOLLAND B.V., 7602 EM Almelo (NL)
(72) Inventor: Kölling, Arie Jan, NL-7522 KC Enschede (NL)
(74) Representative: de Bruijn, Leendert C.

(56) References cited:
- EP-A- 0 208 545
- GB-A- 2 186 360
- US-A- 3 580 082
- US-A- 4 158 310
- PATENT ABSTRACTS OF JAPAN vol. 10, no. 132 (P-456)(2189) 16 May 1986,& JP-A-60 253930 (NIPPON DENKI K.K.) 14 December 1985

## Description

The invention relates to an optical pressure sensor for determining the variation of the pressure in an internal combustion engine, comprising a bolt having a through bore, a membrane which is mounted in the bore or at one end of said bore and at least one surface of which is reflective, means for causing light to fall on the reflective membrane part and means for measuring the light reflected at the membrane or guiding it to a light-measuring device.

Such a sensor is disclosed by GB-A-2,186,360. In that case, both the means for causing light to fall on the reflective membrane part and the means for guiding the light reflected at the membrane to a light-measuring device consist of separate bundles of optical fibres. Said sensor is cheap to manufacture and easy to install. The susceptibility to malfunction is also low. A drawback of the known sensor is that it is sensitive to the intensity of the light source, the spacing between the bundles of optical fibres and the membrane, the light loss in the input fibres, variations in the reflecting power of the reflective membrane surface and the ambient temperature. In view of this, the bundles of optical fibres will have to be accurately positioned.

The object of the invention is to avoid these drawbacks and for this purpose the pressure sensor referred to in the preamble is characterised in that the means for causing light to fall on the reflective membrane part have the form of a ring or sheath, in that means are situated both inside the ring or sheath and around the ring or sheath for measuring light reflected at the membrane or guiding it to a light-measuring device, and in that the pressure drop across the membrane is determined from the ratio of the reflected light which is received via the means provided around said ring or sheath and the reflected light which is received via the means provided in the ring or sheath.

Since the pressure difference is determined from the abovementioned ratio, the measurement result is independent of an accurate positioning of the said means.

Preferably, use is made of an optical fibre assembly consisting of three concentric bundles of light-transmitting fibres.

In a variant, use is made of an annular light source and two concentric photodiodes.

The invention will now be explained in greater detail by reference to the figures.

Figure 1 shows a section through a first embodiment of an optical pressure sensor for an internal combustion engine.

Figure 2 shows a second embodiment.

Figures 3 a, 3b and 3c show diagrammatically the operation of the pressure sensor in three positions of the membrane.

Figure 3d shows a section of the fibre assembly.

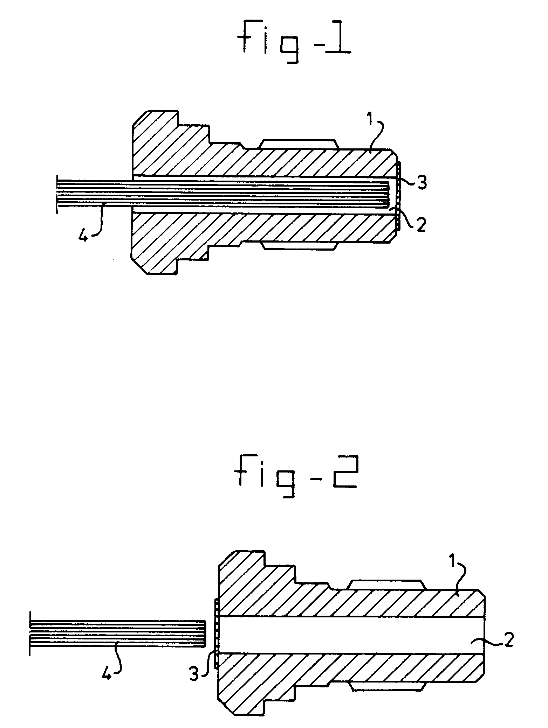

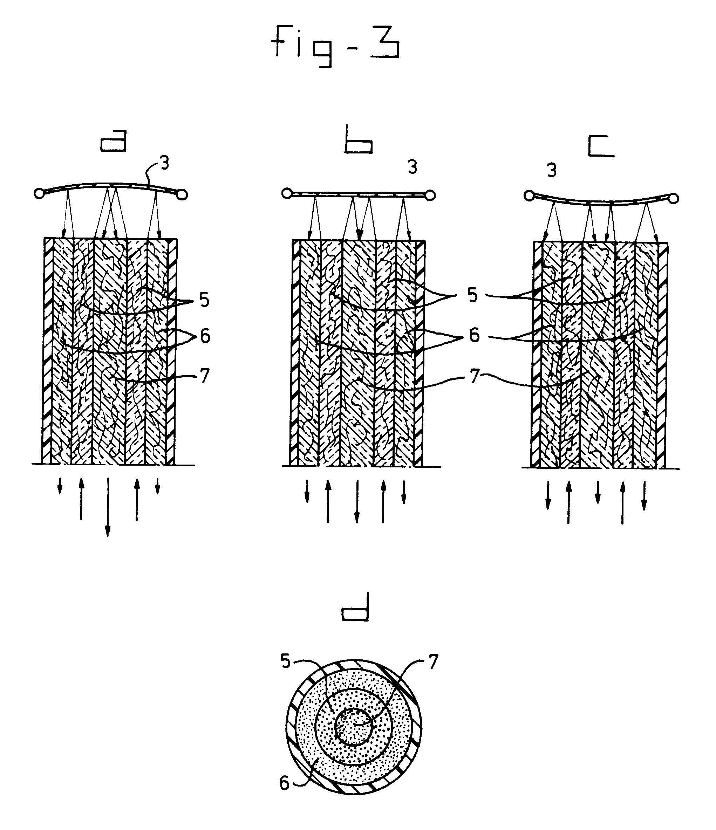

The pressure sensors shown comprise a bolt 1 to be screwed into a threaded opening in the wall of an internal combustion engine, in particular a diesel pump, which bolt is provided with a through bore 2, a membrane 3 provided at one end of the bolt and an optical fibre assembly 4 which in Figure 1 does, and in Figure 2 does not, project into the bore 2. The membrane surface facing the fibre assembly is reflective.

As is evident from Figure 3, the optical fibre assembly comprises three sheath-type optical fibre groups: a light-input fibre group 5 having a light-output fibre group 6 or 7, respectively, on either side.

Figures 3 a, 3b and 3c consecutively show the case where the pressure in the pump is higher than, equal to, and lower than the atmospheric pressure. The bulging of the membrane is a measure of the pressure in the internal combustion engine. In the case of Figure 3 a, the membrane reflects appreciably more light via the innermost fibre sheath 7 than via the outermost fibre sheath 6. In the case of Figure 3c, it is the other way round, while in Figure 3b equally as much light is reflected via both fibre sheaths 6 and 7. The ratio of the light reflected via the sheath 6 to the light reflected via the sheath 7 is a measure of the bulging of the membrane, that is to say, of the pressure difference on either side of the membrane.

The sensor is relatively insensitive to vibrations and emminently suitable for pressure measurements in an internal combustion engine, in particular a diesel engine. In order to prevent contamination of the reflective membrane, the bore 2 will be sealed by a plug or head. This is temporarily removed during measurement.

Because the fibre assembly is not inserted into the bore 2 in the embodiment according to Figure 2 (the membrane is provided at the head of the bolt), the fibre assembly can be replaced by a central light source and two concentric photodiodes. The fibre assembly or the central light source with photodiodes will normally only be placed in or near the bolt during measurement.

## Claims

1. Optical pressure sensor for determining the variation of the pressure in an internal combustion engine, comprising a bolt (1) having a through bore (2), a membrane (3) which is mounted in the bore or at one end of said bore and at least one surface of which is reflective, means (5) for causing light to fall on the reflective membrane part and means (6, 7) for measuring the light reflected at the membrane or guiding it to a light-measuring device, characterised in that the means for causing light to fall on the reflective membrane part have the form of a ring or sheath (5), in that means (7 or 6, respectively) are situated both inside the ring or sheath (5) and around the ring or sheath (5) for measuring light reflected at the membrane or guiding it to a light measuring device, and in that the pressure drop across the membrane is determined from the ratio of the reflected light which is received via the means (6) provided around said ring or sheath (5) and the reflected light which is received via the means (7) provided in the ring or sheath (5).

2. Optical pressure sensor according to Claim 1, characterised by an optical fibre assembly consisting of three concentric bundles of light-transmitting fibres (5, 6, 7).

3. Optical pressure sensor according to Claim 1, characterised by an annular light source and two concentric photodiodes.

## Patentansprüche

1. Optischer Drucksensor zur Feststellung der Druckschwankungen in einer Brennkraftmaschine bestehend aus:
einem Bolzen (1) mit einer Durchgangsbohrung (2), einer in der Bohrung oder an einem Ende der Bohrung angeordneten Membrane (3), die mindestens eine reflektierende Oberfläche aufweist, einer Einrichtung (5) zum Bewirken, daß Licht auf den reflektiven Membranenteil fällt und Einrichtungen (6, 7) zum Messen des an der Membrane reflektierten Lichts oder zum Führen des reflektierten Lichts zu einer Lichtmeßvorrichtung, **dadurch gekennzeichnet,** daß die Einrichtung zum Bewirken, daß Licht auf den reflektiven Membranteil fällt, die Form eines Ringes oder einer Hülse (5) hat, daß die Einrichtungen (7 oder 6) sowohl innerhalb des Ringes oder der Hülse (5) als auch um den Ring oder die Hülse (5) herum angeordnet sind, um das an der Membrane reflektierte Licht zu messen oder es an eine Lichtmeßvorrichtung zu führen, und daß der jenseits der Membrane anstehende Druck bestimmt wird aus dem Quotient des reflektierten Lichts, das über die Einrichtung (6) empfangen wird, die um den Ring oder die Hülse (5) herum angeordnet ist, und dem reflektierten Licht, das über die Einrichtung (7) erhalten wird, die in dem Ring oder der Hülse (5) angeordnet ist.

2. Optischer Drucksensor nach Anspruch 1, **gekennzeichnet** durch eine aus drei konzentrischen Bündeln lichtübertragender Fasern (5, 6, 7) bestehende optische Faseransammlung.

3. Optischer Drucksensor nach Anspruch 1, **gekennzeichnet** durch eine ringförmige Lichtquelle und zwei konzentrische Photodioden.

## Revendications

1. Détecteur optique de pression destiné à déterminer la variation de pression dans un moteur à combustion interne, comprenant un boulon (1) présentant un alésage traversant (2), une membrane (3) qui est montée dans l'alésage ou à une extrémité dudit alésage et dont au moins une surface est réfléchissante, des moyens (5) pour faire tomber la lumière sur la partie de membrane réfléchissante et des moyens (6, 7) pour mesurer la lumière réfléchie à la membrane ou pour la guider vers un dispositif de mesure de lumière, caractérisé en ce que les moyens pour faire tomber la lumière sur la partie de membrane réfléchissante ont la forme d'un anneau ou d'une gaine (5), en ce que tant à l'intérieur de l'anneau ou de la gaine (5) qu'autour de l'anneau ou de la gaine (5) sont situés des moyens (respectivement 7 ou 6) pour mesurer la lumière réfléchie à la membrane ou la guider vers un dispositif de mesure de lumière et en ce que la perte de pression à la membrane est déterminée à partir du rapport entre la lumière réfléchie qui est reçue via les moyens (6) prévus autour dudit anneau ou de ladite gaine (5) et la lumière réfléchie qui est reçue via les moyens (7) prévus dans l'anneau ou la gaine (5).

2. Détecteur optique de pression suivant la revendication 1, caractérisé par un ensemble de fibres optiques composé de trois faisceaux concentriques de fibres de transmission de lumière (5, 6, 7).

3. Détecteur optique de pression suivant la revendication 1, caractérisé par une source lumineuse annulaire et deux photodiodes concentriques.
